# EUROPEAN PATENT APPLICATION

(11) **EP 4 362 477 A1**
(43) Date of publication of application: **01.05.2024**
(21) Application number: 22865040.4
(22) Date of filing: 31.08.2022
(51) Int. Cl.: H04N 21/466, H04N 21/45, G06N 3/08, G06N 20/00, G06N 5/02

(54) **ELECTRONIC DEVICE AND CONTROLLING METHOD OF ELECTRONIC DEVICE**

(30) Priority: 31.08.2021 KR 20210115908; 12.04.2022 KR 20220045188
(71) Applicant: Samsung Electronics Co., Ltd., Suwon-si, Gyeonggi-do 16677 (KR)
(72) Inventor: OH, Eunkyu, Suwon-si, Gyeonggi-do 16677 (KR); KIM, Taehun, Suwon-si, Gyeonggi-do 16677 (KR); KIM, Minsoo, Suwon-si, Gyeonggi-do 16677 (KR); JI, Yunhu, Suwon-si, Gyeonggi-do 16677 (KR); KHYALIA, Sushil, Suwon-si, Gyeonggi-do 16677 (KR)
(74) Representative: Appleyard Lees IP LLP
(86) International application number: PCT/KR2022/013026
(87) International publication number: WO 2023/033538

(57) **Abstract**

An electronic device is provided. The electronic device includes: a memory storing a neural network model; and a processor configured to: obtain a plurality of individual graphs based on an access history for a plurality of contents over a plurality of sessions; generate an integrated graph, in which the plurality of individual graphs are integrated, based on a connection relationship between nodes included in the plurality of individual graphs and a number of times each connection between the nodes is repeated; obtain a plurality of augmented graphs by augmenting each of the plurality of individual graphs based on the integrated graph; and train the neural network model to provide recommended content based on the plurality of augmented graphs.

## Description

### [Technical Field]

The disclosure relates to an electronic device and a method for controlling an electronic device, and more specifically, to an electronic device capable of providing information indicating a recommended content using a neural network model and a method for controlling an electronic device.

### [Background Art]

In recent years, development of technology relating to a neural network model has accelerated, and there has been a focus on technology for providing information indicating a recommended content to a user using a graph neural network (GNN) model.

A neural network model according to the technology of the related art has a limited ability to provide a recommended content corresponding to a user's intention by effectively analyzing a complicated sequential interaction for a content of the user.

A technology of the related art for enhancing performance of a neural network model by training the neural network model by augmenting graphs included in training data is provided, but according to the technology of the related art, the graphs are augmented using only information in a specific session, and therefore there is a limit that it is not the effective augmentation method.

### [Disclosure]

### [Technical Solution]

One or more embodiments overcome the limits of the related art described above. One or more embodiments provide an electronic device capable of training a neural network model based on effective augmentation of an individual graph showing an access history of a user for a content, and predicting a recommended content corresponding to a user's intention accordingly, and a method for controlling an electronic device.

In accordance with an aspect of the disclosure, an electronic device includes: a memory storing a neural network model; and a processor configured to: obtain a plurality of individual graphs based on an access history for a plurality of contents over a plurality of sessions; generate an integrated graph, in which the plurality of individual graphs are integrated, based on a connection relationship between nodes included in the plurality of individual graphs and a number of times each connection between the nodes is repeated; obtain a plurality of augmented graphs by augmenting each of the plurality of individual graphs based on the integrated graph; and train the neural network model to provide recommended content based on the plurality of augmented graphs.

The processor may be further configured to obtain at least one augmented graph of the plurality of augmented graphs by adding at least one node included in the integrated graph to a plurality of nodes included in each of the plurality of individual graphs.

The processor may be further configured to obtain at least one augmented graph of the plurality of augmented graphs by changing at least one node of a plurality of nodes included in each of the plurality of individual graphs to at least one node included in the integrated graph.

The processor may be further configured to train the neural network model based on a contrastive loss for the plurality of augmented graphs.

The processor may be further configured to implement an encoder configured to obtain vectors corresponding to the plurality of individual graphs and vectors corresponding to the plurality of augmented graphs, a prediction module configured to obtain recommended content information corresponding to each of the plurality of individual graphs, an augmentation module configured to obtain the plurality of augmented graphs by augmenting each of the plurality of individual graphs, and a contrastive loss obtaining module configured to obtain the contrastive loss for the plurality of augmented graphs.

The processor may be further configured to train the encoder to map augmented graphs corresponding to common individual graphs, among the plurality of augmented graphs, with vectors in a short distance on a vector space, and map augmented graphs corresponding to different individual graphs among the plurality of augmented graphs with vectors in a long distance on the vector space.

A vector space for defining vectors corresponding to the plurality of augmented graphs may be different from a vector space for defining the contrastive loss for the plurality of augmented graphs.

The processor may be further configured to control the augmentation module to obtain three or more augmented graphs for each of the plurality of individual graphs by augmenting each of the plurality of individual graphs by three or more different methods, and the contrastive loss may include two or more positive pairs defined based on vectors corresponding to the three or more augmented graphs.

In accordance with an aspect of the disclosure, a method for controlling an electronic device using a neural network model includes: obtaining a plurality of individual graphs based on an access history for a plurality of contents over a plurality of sessions; generating an integrated graph, in which the plurality of individual graphs are integrated, based on a connection relationship between nodes included in the plurality of individual graphs and a number of times each connection between the nodes is repeated; obtaining a plurality of augmented graphs by augmenting each of the plurality of individual graphs based on the integrated graph; and training the neural network model to provide recommended content based on the plurality of augmented graphs.

The obtaining the plurality of augmented graphs may include obtaining at least one augmented graph of the plurality of augmented graphs by adding at least one node included in the integrated graph to a plurality of nodes included in each of the plurality of individual graphs.

The obtaining the plurality of augmented graphs may include obtaining at least one augmented graph of the plurality of augmented graphs by changing at least one node of a plurality of nodes included in each of the plurality of individual graphs to at least one node included in the integrated graph.

The training the neural network model may include training the neural network model based on a contrastive loss for the plurality of augmented graphs.

The method may further include: controlling an encoder to obtain vectors corresponding to the plurality of individual graphs and vectors corresponding to the plurality of augmented graphs; controlling a prediction module to obtain recommended content information corresponding to each of the plurality of individual graphs; controlling an augmentation module to obtain the plurality of augmented graphs by augmenting each of the plurality of individual graphs; and controlling a contrastive loss obtaining module to obtain the contrastive loss for the plurality of augmented graphs.

The method may further include training the encoder to map augmented graphs corresponding to common individual graphs, among the plurality of augmented graphs, with vectors in a short distance on a vector space, and map augmented graphs corresponding to different individual graphs among the plurality of augmented graphs with vectors in a long distance on the vector space.

A vector space for defining vectors corresponding to the plurality of augmented graphs may be different from a vector space for defining the contrastive loss for the plurality of augmented graphs.

In accordance with an aspect of the disclosure, a non-transitory computer readable storage medium stores program instructions that are executable by a processor, wherein the program instructions, when executed by the processor, are configured to control a device to: obtain a plurality of individual graphs based on an access history for a plurality of contents over a plurality of sessions; generate an integrated graph, in which the plurality of individual graphs are integrated, based on a connection relationship between nodes included in the plurality of individual graphs and a number of times each connection between the nodes is repeated; obtain a plurality of augmented graphs by augmenting each of the plurality of individual graphs based on the integrated graph; and train a neural network model to provide recommended content based on the plurality of augmented graphs.

In accordance with an aspect of the disclosure, a device includes: a memory; and a processor configured to execute instructions stored in the memory to: obtain a plurality of individual graphs based on access history corresponding to a plurality of contents; obtain a plurality of vectors based on the plurality of individual graphs; identify recommended content by controlling a neural network model based on the plurality of vectors; obtain an integrated graph based on each of the plurality of individual graphs; obtain a plurality of augmented graphs based on each of the integrated graph; obtaining a plurality of augmented vectors based on the plurality of augmented graphs; and train the neural network model based on the plurality of augmented vectors.

### [Description of Drawings]

FIG. 1 is a block diagram schematically illustrating a configuration of an electronic device according to an embodiment.
FIG. 2 is a diagram illustrating a plurality of modules included in a neural network model, and input and output data for each of the plurality of modules according to an embodiment.
FIG. 3 is a diagram illustrating an augmentation process of an individual graph according to various embodiments.
FIG. 4 is a block diagram illustrating the configuration of the electronic device according to an embodiment.
FIG. 5 is a diagram illustrating information indicating an access history of a user according to an embodiment.
FIG. 6 is a diagram illustrating an example of a user interface for providing information indicating a recommended content based on the access history of the user.
FIG. 7 is a diagram illustrating information indicating the access history of the user according to an embodiment.
FIG. 8 is a diagram illustrating an example of the user interface for providing information indicating the recommended content based on the access history of the user.
FIG. 9 is a flowchart illustrating a method for controlling the electronic device according to an embodiment.

### [Mode for Invention]

Hereinafter, embodiments will be described in greater detail with reference to the drawings. It should be noted that the description is not for limiting the scope of the disclosure to a specific embodiment, but should be interpreted to include all modifications, equivalents and/or alternatives of the embodiments of the disclosure. In relation to explanation of the drawings, similar reference numerals may be used for similar elements.

In describing the disclosure, a detailed description of the related art or configuration may be omitted when it is determined that the detailed description may unnecessarily obscure a gist of the disclosure.

In addition, the embodiments below may be changed in various forms and the scope of the technical idea of the disclosure is not limited to the embodiments below. The embodiments are provided to complete the disclosure and completely transfer the technical idea of the disclosure to those skilled in the art.

The terms used in the disclosure are merely used for describing specific embodiments and do not limit the scope of a right of the disclosure. In the disclosure, unless otherwise defined specifically, a singular expression may encompass a plural expression.

In this disclosure, the terms such as "comprise", "may comprise", "consist of', or "may consist of" are used herein to designate a presence of corresponding features (e.g., constituent elements such as number, function, operation, or part), and not to preclude a presence of additional features.

In this disclosure, expressions such as "at least one of" when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

The terms "1st" or "first" and "2nd" or "second" may use corresponding components regardless of importance or order and are used to distinguish a component from another component without limiting the components.

If it is described that a certain element (e.g., first element) is "operatively or communicatively coupled with/to" or is "connected to" another element (e.g., second element), it should be understood that the certain element may be connected to the other element directly or through still another element (e.g., third element).

On the other hand, if it is described that a certain element (e.g., first element) is "directly coupled to" or "directly connected to" another element (e.g., second element), it may be understood that there is no element (e.g., third element) between the certain element and another element.

Also, the expression "configured to" used in the disclosure may be interchangeably used with other expressions such as "suitable for," "having the capacity to," "designed to," "adapted to," "made to," and "capable of," depending on cases. The expression "configured to" does not necessarily refer to a device being "specifically designed to" in terms of hardware.

Instead, under some circumstances, the expression "a device configured to" may refer to the device being "capable of" performing an operation together with another device or component. For example, the phrase "a processor configured (or set) to perform A, B, and C" may refer, for example, and without limitation, to a dedicated processor (e.g., an embedded processor) for performing the corresponding operations, a generic-purpose processor (e.g., a central processing unit (CPU) or an application processor), or the like, that can perform the corresponding operations by executing one or more software programs stored in a memory device.

A term such as "module" or "unit" in the embodiment executes at least one function or operation and may be implemented as hardware, software, or a combination of hardware and software. Further, except for when each of a plurality of "modules", "units", "parts" and the like needs to be realized in an individual specific hardware, the components may be integrated in at least one module or chip and be implemented in at least one processor.

Various elements and areas in the drawings are schematically illustrated. Therefore, the technical spirit of the disclosure is not limited by comparative sizes or intervals illustrated in the accompanying drawings.

Hereinafter, with reference to the accompanying drawings, embodiments of the disclosure will be described in detail to facilitate practice by one of ordinary skill in the art to which the disclosure belongs.

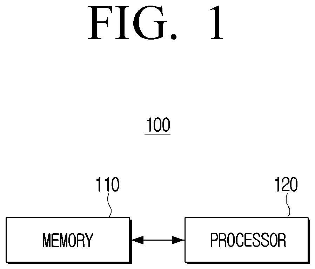

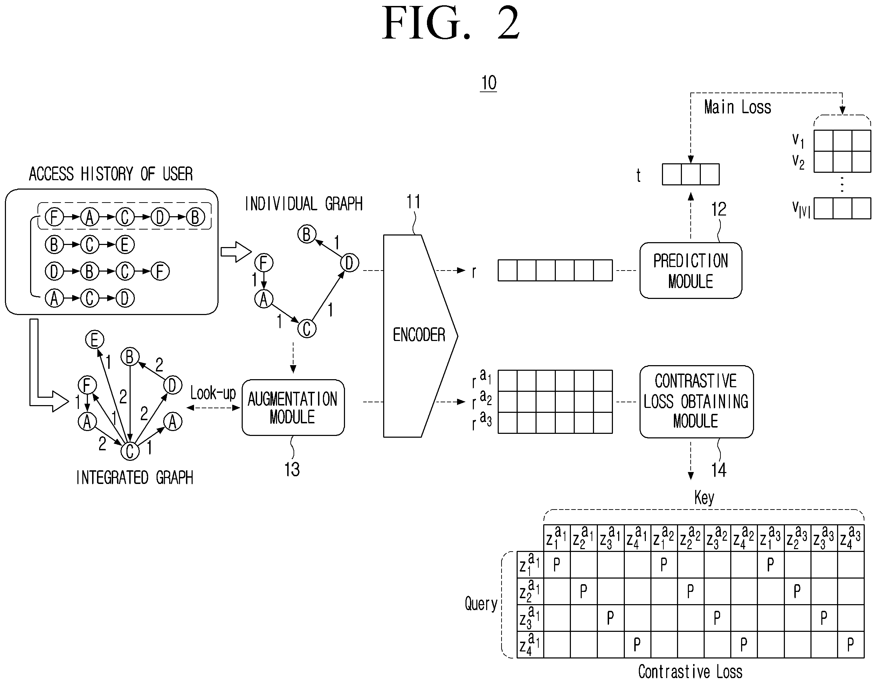

FIG. 1 is a block diagram schematically illustrating a configuration of an electronic device 100 according to an embodiment. FIG. 2 is a diagram illustrating a plurality of modules included in a neural network model and input and output data for each of the plurality of modules according to an embodiment.

Hereinafter, key terms used in the description of the disclosure will be described and then various embodiments of the disclosure will be described with reference to FIGS. 1 and 2.

First, an electronic device 100 according to the disclosure refers to a device capable of providing a recommended content based on an access history of a user for a content. Specifically, the electronic device 100 may provide a recommended content using a trained neural network model. For example, the electronic device 100 may be a server providing a content. However, the electronic device 100 is not limited to a server, and may be another type of electronic device.

A neural network model refers to an artificial intelligence model trained to obtain information indicating a recommended content based on information indicating an access history of a user for a content. The type of neural network model may vary according to embodiments, but hereinafter, for convenience of description, the neural network model will be described as a model containing a graph neural network (GNN).

The graph neural network refers to a neural network model trained to output data corresponding to input data, when the input data is input to a graph. In this regard, the graph neural network refers to a neural network which can be directly applied to a graph.

The graph refers to a data structure including nodes (or points) and lines (or edges) connecting the nodes. Specifically, the graph may include data corresponding to each node included in the graph and data corresponding to a line representing a connection relationship between the nodes. The input of the graph to the neural network model may be used as the meaning of input of the data corresponding to each node included in the graph and the data corresponding to the line representing the connection relationship between the nodes to the neural network model.

In the disclosure, nodes included in the graph may represent contents accessed by the user, and lines connecting the nodes may refer to a sequential connection relationship between the contents that the user accessed. For example, in a case where a user watched a movie A, a movie B, and a movie C sequentially in a specific session, the graph may include three nodes corresponding to the movie A, the movie B and the movie C, as well as a line connecting the node corresponding to the movie A and the node corresponding to the movie B and a line connecting the node corresponding to the movie B and the node corresponding to the movie C.

Access history of a user for a content is used to represent information various contents provided through the electronic device 100 that a user has accessed in the past or is currently accessing. For example, the access history of the user for the content may be an image content or a voice content and may include a content reproduction history, and the content may be a web page representing product information and may include a loading history of a web page or a history of a user input for a specific product.

Access of the user for the content is used as a term for collectively referring to an event representing that the user of the electronic device 100 interacted with a content provided through the electronic device 100. Specifically, the access of the user may be performed by a positive method such as a case where a specific content is provided to a user according to a user input of selecting the specific content among a plurality of contents, and may also be performed by a passive method such as a case where a specific content is provided in a form of a notification or an advertisement to the user.

The access of the user for the content may be divided according to a plurality of sessions. Herein, the session may refer to a time section during which a series of interactions is continued between the electronic device 100 and the user. In addition, the term continue may mean that, in a case where interactions between the electronic device 100 and the user continuously occur, an interval between the interactions continuously occurring is a predetermined threshold time or less. In this regard, the plurality of sessions may be divided according to whether the interactions between the electronic device 100 and the user are continued, and accordingly this will be described in more detail hereinafter.

The plurality of sessions may be divided based on a time when the access of the user for the content is performed or based on an application that is used to perform the access of the user for the content. Specifically, when a threshold time elapses after a first access of the user for the content is performed, the first access and a second access after the threshold time has elapsed may be included in different sessions. In addition, an access performed through a first application and an access performed through a second application may be included in different sessions. Further, the basis for dividing the plurality of sessions may be set variously.

For example, in a case where an interval between a user input performed by continuous interactions between the electronic device 100 and the user, an internal process by the user input, and an output of a content corresponding to the user input does not exceed a threshold time, it may be determined that the interaction between the electronic device 100 and the user is continued and one session is maintained. As in a case where an application for providing a content is changed or a server for providing a content is changed, if a subject or means for providing a content is changed, it may be determined that the interaction between the electronic device 100 and the user is not continued and the sessions are divided before and after changing the application or changing the server.

Referring to FIG. 1, the electronic device 100 according to the disclosure may include a memory 110 and a processor 120. In addition, referring to FIG. 2, the neural network model 10 according to the disclosure may include a plurality of modules such as an encoder 11, a prediction module 12, an augmentation module 13, and a contrastive loss obtaining module 14.

The memory 110 may store at least one instruction for the electronic device 100. In addition, the memory 110 may store an operating system (O/S) for driving the electronic device 100. In addition, the memory 110 may store various software programs or applications for operating the electronic device 100 according to various embodiments of the disclosure. Further, the memory 110 may include a semiconductor memory such as a flash memory or a magnetic storage medium such as a hard disk.

The memory 110 may store various software modules for operating the electronic device 100 according to various embodiments of the disclosure, and the processor 120 may control an operation of the electronic device 100 by executing the various software modules stored in the memory 110. For example, the processor 120 may execute software modules stored in the memory 110 to implement the encoder 11, the prediction module 12, the augmentation module 13 and the contrastive loss obtaining module 14. The memory 110 may be accessed by the processor 120 and reading, recording, editing, deleting, or updating of the data by the processor 120 may be executed.

The memory 110 may include a read-only memory (ROM) and a random access memory (RAM) in the electronic device, or a memory card (e.g., micro SD card or memory stick) detachably connected to the electronic device 100.

Particularly, in various embodiments according to the disclosure, the memory 110 may store data for a neural network model 10, specifically, information indicating layers configuring a plurality of modules, information indicating a weight and a parameter configuring each layer, and input and output data for each of the plurality of modules. In addition, the memory 110 may store information indicating an access history of a user for a content, an individual graph, an integrated graph, an augmentation graph, information indicating a recommended content, and the like.

In addition, various information necessary in a range of achieving the object of the disclosure may be stored in the memory 110, and the information stored in the memory 110 may be received from an external device or updated according to an input by a user.

The processor 120 may control general operations of the electronic device 100. Specifically, the processor 120 may be connected to constituent elements of the electronic device 100, including the memory 110, and the operation of the electronic device 100 may be generally controlled by executing at least one instruction stored in the memory 110.

The processor 120 may be implemented by various methods. For example, the processor 120 may be implemented as at least one of an application specific integrated circuit (ASIC), an embedded processor, a microprocessor, a hardware control logic, a hardware finite state machine (FSM), and a digital signal processor (DSP). The processor 120 may include a central processing unit (CPU), a graphic processing unit (GPU), and a main processing unit (MPU).

Particularly, in various embodiments of the disclosure, the processor 120 may load data for a plurality of modules stored in the memory 110 and various embodiments according to the disclosure may be implemented through the plurality of modules. In this regard, the plurality of modules may be implemented as a software module and at least some of the plurality of modules may be implemented as hardware modules included in the processor 120.

The processor 120 may provide a recommended content corresponding to an access history of a user using a neural network model 10. Specifically, the processor 120 may provide the recommended content corresponding to the access history of the user using an encoder 11 and a prediction module 12 included in the neural network model 10.

The encoder 11 may obtain a vector corresponding to an individual graph and particularly, the encoder 11 may include a graph neural network. In the disclosure, the individual graph may refer to a graph representing the access history of the user for a plurality of contents by each session individually and is distinguished from an integrated graph and an augmented graph which will be described below. For example, referring to FIG. 2, the individual graph may include information indicating contents (A, B, C, D, and F) that the user accessed in a first session (F → A → C → D → B) among access histories of the user, sequential connection relationships between the contents (connection in order of F, A, C, D and B), and the number of times of connection between the contents (1 time for each content).

Specifically, when the individual graph is input, the encoder 11 may output a vector corresponding to the input individual graph. Herein, the vector is obtained by digitizing features of an input graph in its entirety, and may be indicated as a term such as representation or feature representation. Accordingly, in FIG. 2, the vector output through the encoder 11 is represented as a symbol r. The encoder 11 may obtain a vector corresponding to the augmented graph, in addition to the individual graph, and this will be described below.

The prediction module 12 may obtain recommended content information corresponding to the individual graph. Specifically, in a case where the vector corresponding to the individual graph is input, the prediction module 12 may output recommended content information corresponding to the input vector. The recommended content information may refer to information for recommending a content with a high possibility of the access of the user after the contents included in the individual graph are input to the encoder 11. The recommended content information may be output in a form of a vector as illustrated in FIG. 2, and a dimension of the vector output through the prediction module 12 may be different from a dimension of the vector output through the encoder 11. The vector output through the prediction module 12 may refer to a term such as a target item, and the vector output through the prediction module 12 is represented as a symbol t in FIG. 2.

When the recommended content information is obtained through the prediction module 12, the processor 120 may obtain a main loss by comparing the obtained recommended content information with label information, and train the neural network model 10 by a supervised learning method based on the main loss. In FIG. 2, the label information to be compared with the recommended content information is represented as a symbol V

Specifically, the processor 120 may train a neural network model 10 in a direction of reducing the main loss by performing back propagation based on the obtained main loss. In this regard, when the neural network model 10 is trained based on the main loss, the prediction module 12 may be trained to obtain the recommended content information capable of reducing the main loss and the encoder 11 may be trained to obtain a vector capable of reducing the main loss.

The main loss may be divided from a contrastive loss, which will be described later, and obtained by calculating a cosine similarity between the recommended content information obtained through the prediction module 12 and pre-stored label information. In addition to the cosine similarity, other similarity calculation methods (e.g., distance calculation methods) such as Euclidean distance or Manhattan distance may also be used.

As described above, the processor 120 may not only train the neural network model 10 based on the main loss obtained by comparing the recommended content information with the label information, but also augment the individual graph, obtain the augmentation graph, and train the neural network model 10 using the augmentation graph. Hereinafter, a process of obtaining the augmentation graph and a process of training a neural network model 10 based on the contrastive loss according to the disclosure will be described.

In an embodiment, the processor 120 may obtain a plurality of individual graphs representing the access history of the user for a plurality of contents by a plurality of sessions. Specifically, the processor 120 may collect information indicating the history that the user accessed the plurality of contents during a predetermined period. In addition, the processor 120 may divide the access history of the user by the plurality of sessions and obtain a plurality of individual graphs representing the access history by each session.

When the plurality of individual graphs are obtained, the processor 120 may generate the integrated graph, in which the plurality of individual graphs are integrated, based on the connection relationship between the nodes included in the plurality of individual graphs and the number of times of connection.

The integrated graph refers to a graph collectively representing the access history of the user for the plurality of contents. Specifically, the processor 120 may generate the integrated graph including information indicating nodes corresponding to contents accessed by the user during the plurality of sessions, lines representing the connection relationship of the nodes, and the number of times of connection of the nodes.

Referring to FIG. 2, the integrated graph may include information indicating the contents A, B, C, D, E, and F in the access history of the user from a plurality of sessions, the sequential connection relationship between the contents, and the number of times of connection between the contents. For example, in the integrated graph of FIG. 2, A → C may represent that the user accessed the content A and then accessed the content C, and the number 2 allocated in A → C may represent that the number of times that the user accessed the content A and then accessed the content C in the entire session is two.

When the integrated graph is obtained, the processor 120 may obtain a plurality of augmentation graphs by performing the augmentation of each of the plurality of individual graphs based on the integrated graph. Specifically, the processor 120 may obtain the plurality of augmentation graphs through the augmentation module 13. In this regard, the augmentation module 13 may refer to a module capable of obtaining the plurality of augmentation graphs by augmenting each of the plurality of individual graphs.

Augmentation refers to a technology of increasing the amount of data by applying various algorithms to a small amount of data. Particularly, the augmentation technology may be used to solve the problem of a deterioration in performance of the neural network model 10, or underfitting or overfitting, occurring when the amount of training data is insufficient when training the neural network model 10.

The augmentation graph according to the disclosure is a graph generated based on the plurality of individual graphs, and at least one of the nodes included in the augmentation graph, the connection relationship between the nodes, and the number of times of connection may be different from the plurality of individual graphs. When the process of obtaining the augmentation graph which will be described below is performed, the neural network model 10 may obtain the vector representing the feature of the input graph better and predict the recommended content corresponding to the user's intention, and thus this will be described in more detail after describing the process of obtaining the augmentation graph.

In an embodiment, the processor 120 may obtain at least one augmentation graph among the plurality of augmentation graphs by adding at least one node included in the integrated graph to the plurality of nodes included in each of the plurality of individual graphs. This may be referred to as an injection method.

Herein, the node added to the individual graph may be determined based on the connection relationship of the nodes connected to the integrated graph and the number of times of the connection. For example, the augmentation module 13 may obtain the augmentation graph by changing the individual graph corresponding to the session A → C → D of FIG. 2 to the graph having the connection relationship of F → A → C → D, based on the point that the integrated graph includes the connection relationship of F → A.

In an embodiment, the processor 120 may obtain at least one augmentation graph among the plurality of augmentation graph by changing at least one node of the plurality of nodes included in each of the plurality of individual graphs to at least one node included in the integrated graph. This may be referred to as a change method.

Here, the node changed in the individual graph may be determined based on the connection relationship between the nodes connected to the integrated graph and the number of times of connection. For example, the augmentation module 13 may obtain the augmentation graph by changing the individual graph corresponding to the session of B → C → E of FIG. 2 to the graph having the connection relationship of B → C → D based on the point that the number of times of connection for the connection relationship of C → D in the integrated graph is two, which is greater than the number of times of connection for the connection relationship of C → E.

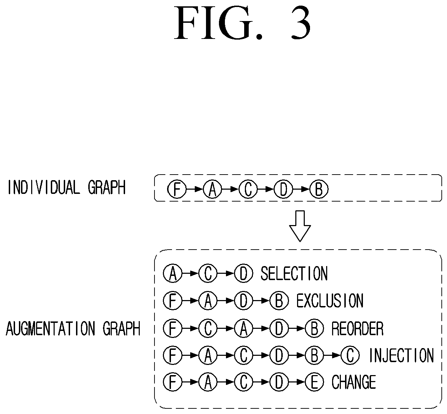

In addition, the processor 120 may obtain the plurality of augmentation graphs by using various augmentation methods such as selecting only some nodes among the plurality of nodes included in each of the plurality of individual graphs, removing some nodes, or rearranging the order of some nodes. Various augmentation methods according to the disclosure will be described in more detail with reference to FIG. 3.

When the plurality of augmentation graph are obtained, the processor 120 may train the neural network model 10 based on the plurality of augmentation graphs. Specifically, the processor 120 may obtain a contrastive loss through a contrastive loss obtaining module 14, and train a neural network model 10 based on the obtained contrastive loss according to a contrastive learning method. Accordingly, the contrastive loss obtaining module 14 refers to a module capable of obtaining the contrastive loss for the plurality of augmentation graphs.

Contrastive learning is a kind of self-supervised learning and refers to a method for obtaining augmentation data by applying different augmentation methods to data and training the neural network model 10 so that a distance between feature representations of a positive pair among the data is short and a distance between feature representations of a negative pair among the data is long. In addition, the contrastive loss may be defined as a set of a positive pair and a negative pair representing the relationship between the augmentation data. The positive pair and the negative pair will be described below in more detail.

Specifically, when the plurality of augmentation graphs are obtained through the augmentation module 13, the processor 120 may obtain a vector (that is, representation) corresponding to each of the plurality of augmentation graphs by inputting the plurality of augmentation graphs to the encoder 11. As shown in FIG. 2, the encoder 11 may obtain vectors r^{a1}, r^{a2}, and r^{a3}, respectively representing a vector corresponding to augmentation data obtained by a first augmentation method, a vector corresponding to augmentation data obtained by a second augmentation method, and a vector corresponding to augmentation data obtained by a third augmentation method.

When the vectors corresponding to each of the plurality of augmentation graphs are obtained, the processor 120 may obtain vectors configuring the contrastive loss by inputting the vectors corresponding to each of the plurality of augmentation graphs to the contrastive loss obtaining module 14 to project to a vector space in a different dimension. In this regard, a vector space for defining vectors corresponding to the plurality of augmentation graphs may be different from a vector space for defining the contrastive loss for the plurality of augmentation graphs.

In addition, the vector space for defining the contrastive loss for the plurality of augmentation graphs may be different from a vector space corresponding to an output of the prediction module 12. In this regard, according to the disclosure, the vector output through the encoder 11 may be mapped on the vector space different from the vector space corresponding to the output of the prediction module 12, and then a separate learning having independence in a relationship with the learning based on the output of the prediction module 12 may be performed, thereby training the encoder 11 more effectively. The training process based on the contrastive loss will be described below in more detail.

When the vector configuring the contrastive loss is obtained through the contrastive loss obtaining module 14, the contrastive loss representing the relationship of the plurality of augmentation graphs may be obtained. In the example of FIG. 2, zi, z₂, z₃ and z₄ respectively represent a first session, a second session, a third session and a fourth session included in the access history of the user, and superscripts a₁, a₂, and as respectively represent a first augmentation method, a second augmentation method, and a third augmentation method. In this regard, in the example of FIG. 2, z₁^{a1} corresponds to an augmentation graph obtained by applying the first augmentation method to the individual graph corresponding to the first session, and z₁^{a2} corresponds to an augmentation graph obtained by applying the second augmentation method to the individual graph corresponding to the first session.

The table of FIG. 2 represents a relationship between the plurality of augmentation graphs obtained by augmenting the plurality of individual graphs corresponding to the access history of the user of FIG. 2 by the three methods. Herein, the relationship between the plurality of augmentation graphs may include a relationship representing augmentation graphs corresponding to the same individual graphs of the plurality of augmentation graphs (hereinafter, referred to as positive pair) and a relationship representing augmentation graphs corresponding to different individual graphs of the plurality of augmentation graphs (hereinafter, referred to as negative pair).

Specifically, in the table of FIG. 2, p represents the positive pair and the blank represents the negative pair. For example, the relationship between z₁^{a1}, z₁^{a2} and z₁^{a3} indicates the positive pair and the relationship between z₁^{a1}, z₂^{a2}, z₃^{a1} and z₄^{a1} indicates the negative pair.

In this regard, through the contrastive loss obtaining module 14, the contrastive loss in which the augmentation graphs corresponding to the same individual graphs (i.e., same sessions) of the plurality of augmentation graphs are the positive pair and the augmentation graphs corresponding to the different individual graphs (i.e., different sessions) of the plurality of augmentation graphs are the negative pair may be obtained.

Particularly, as illustrated in FIG. 2, the augmentation module 13 according to the disclosure may obtain three or more augmentation graphs for each of the plurality of individual graphs by augmenting each of the plurality of individual graphs by three or more different methods, and accordingly, the contrastive loss may include two or more positive pairs defined based on the vectors corresponding to the three or more augmentation graphs.

When the contrastive loss is obtained, the neural network model 10 may be trained to map the augmentation graphs (i.e., positive pair) corresponding to the same individual graphs among the plurality of augmentation graphs with the vectors in a short distance on the vector space, and map the augmentation graphs (i.e., negative pair) corresponding to the different individual graphs among the plurality of augmentation graphs with the vectors in a long distance on the vector space. Referring to FIG. 2, for example, the neural network model 10 may be trained to map z1^{a1} with z₁^{a2} and z₁^{a3} in a relationship of the positive pair as vectors in a short distance, and to map z₁^{a1} with z₂^{a1}, z₃^{a1}, and z₄^{a1} in a relationship of the negative pair as vectors in a long distance.

When providing actual recommended content information to the user after performing the learning process described above, the usage of the augmentation module 13 and the contrastive loss obtaining module 14 may be stopped and the recommended content information may be obtained through the encoder 11 and the prediction module 12.

The process of training the neural network model 10 based on the recommended content information and the process of training the neural network model 10 based on the contrastive loss may be performed at the same time and may also be performed at different times. For example, the processor 120 may perform the process of training the neural network model 10 based on the recommended content information after performing the process of training the neural network model 10 based on the contrastive loss.

According to the embodiment described above, the electronic device 100 may augment the individual graph representing the access history of the user for the content and effectively train the neural network model 10 based on the output for the augmentation graph.

Particularly, the electronic device 100 may obtain a plurality of augmentation graphs using three or more various augmentation methods in the individual graph and train the encoder 11 based on the contrastive loss including two or more pairs of the positive pair. Accordingly, the encoder 11 may obtain the vector representing the feature of the input graph better. In addition, in a case where the individual graph corresponding to the new session is input in a prediction process of the neural network model 10, the recommended content corresponding to the user's intention may be predicted.

In addition, the electronic device 100 according to the disclosure may use the information from the entire session included in the integrated graph, not only using the information from each session in the process of augmenting the individual graph, and accordingly, a problem of transferring only the information inside the session or losing some information during the augmentation process of the data may be overcome.

FIG. 3 is a diagram illustrating an augmentation process of an individual graph according to various embodiments.

As described above, the processor 120 may generate the integrated graph in which the plurality of individual graphs are integrated based on the connection relationship of nodes included in the plurality of individual graphs and the number of times of connection, and augment each of the plurality of individual graphs based on the integrated graphs, thereby obtaining the plurality of augmentation graphs. Herein, the augmentation of the plurality of individual graphs based on the integrated graph may indicate that the augmentation graph is obtained by reflecting the information indicating the connection relationship of the nodes included in the integrated graph and the number of times of the connection on the individual graph.

FIG. 3 shows an example of an individual graph and an example of various augmentation graphs obtained by applying various augmentation methods to the individual graph. FIG. 3 schematically illustrates the contents accessed by the user in the corresponding session in sequence, rather than illustrating the specific shape of the individual graph and the augmentation graph.

The selection of FIG. 3 represents that the augmentation graph may be obtained by selecting the nodes A, C, and D and lines between the nodes A, C, and D which are a continuous part of the individual graph (F → A → C → D → B). The exclusion of FIG. 3 represents that the augmentation graph may be obtained by excluding the node C of the individual graph (F → A → C → D → B) and connecting a line between the node A and the node D. In addition, the reorder of FIG. 3 represents that the augmentation graph may be obtained by exchanging the nodes A and C of the individual graph (F → A → C → D → B).

The injection of FIG. 3 represents that the augmentation graph may be obtained by adding a new node C to the individual graph (F → A → C → D → B) and connecting the line between the node B and the new node C. The change of FIG. 3 represents that the augmentation graph may be obtained by changing the node B of the individual graph (F → A → C → D → B) to the new node E.

Particularly, the node added to the individual graph in the method of the injection and change may be determined based on the connection relationship of the nodes connected in the integrated graph and the number of times of connection. For example, in the example of FIG. 3, when the integrated graph obtained in advance is the integrated graph of FIG. 2, the new node C added in another augmentation graph in the injection method may be determined based on the point that the node B of the integrated graph is connected to the node C twice. However, the connection relationship is not limited to the direct connection relationship. In the example of FIG. 3, when the integrated graph obtained in advance is the integrated graph of FIG. 2, the new node E added in another augmentation graph in the change method may be determined based on the point that the node C of the integrated graph is connected not only to the node D but also to the node E.

According to the methods of the selection, the exclusion, and the reorder described above, it is advantageous in that the individual graph may be augmented using only information in the corresponding individual graph, but because the method considers only the information in the corresponding individual graph, it is difficult to obtain various augmentation graphs and a problem of loss of information of the corresponding individual graph during the augmentation may occur.

In contrast, according to the methods of the injection and the change, the individual graph may be augmented using, not only the corresponding individual graph, but also information included in the integrated graph in which the information from the plurality of sessions are integrated, and therefore it is possible to obtain various types of augmentation graphs. Accordingly, it is possible to overcome the limit that the information transfer of the node occurs only inside the session according to the conversion of the sequential data according to the plurality of sessions to the graph, and particularly, when the length of the session is small, it is possible to overcome the limit that various variations of the augmentation graph may not be obtained.

Accordingly, the processor 120 according to the disclosure may obtain the augmentation graph using the method of the injection and the change, not only the methods of the selection, the exclusion, and the reorder described above. Specifically, the processor 120 may randomly generate the augmentation graph by using the augmentation method described above through the augmentation module 13, and in this case, a ratio of the nodes to be changed in the individual graph may be preset according to the augmentation. When the augmentation graph is randomly generated and then the process of training the neural network model 10 is performed based on the contrastive loss, the augmentation module 13 may be trained to obtain the augmentation graph capable of reducing the contrastive loss. As a result, the processor 120 may obtain an augmentation graph having a distinction from the existing individual graph in the training process, while maintaining the feature of the individual graph through the augmentation module 13.

The augmentation module 13 according to the disclosure may obtain three or more augmentation graphs for each of the plurality of individual graphs by augmenting each of the plurality of individual graphs by three or more different methods, and accordingly, the contrastive loss may include two or more positive pairs defined based on the vectors corresponding to the three or more augmentation graphs, thereby enabling to perform the more effective augmentation of the individual graph.

Hereinabove, referring to FIG. 3, five augmentation methods are described as example, but these are merely examples, and various other augmentation methods may also be applied to the disclosure.

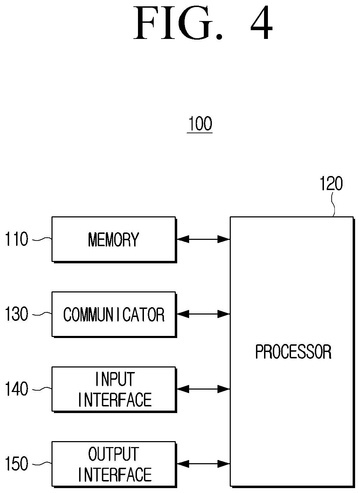

FIG. 4 is a block diagram illustrating the configuration of the electronic device 100 according to an embodiment.

Referring to FIG. 4, the electronic device 100 according to an embodiment of the disclosure may further include a communicator, an input interface, and an output interface, in addition to the memory 110 and the processor 120. However, FIGS. 1 and 4 are merely examples and various constituent elements other than the constituent elements illustrated in FIGS. 1 and 4 may be included in the electronic device 100.

The communicator may include circuitry and may communicate with an external device. Specifically, the processor 120 may receive various data or information from the external device connected through the communicator and transmit various data or information to the external device.

The communicator may include at least one of a Wi-Fi module, a Bluetooth module, a wireless communication module, an NFC module, and an ultra wide band (UWB) module. Specifically, the Wi-Fi module and the Bluetooth module may communicate by a Wi-Fi method and a Bluetooth method, respectively. In a case of using the Wi-Fi module or the Bluetooth module, various pieces of connection information, such as a service set identifier (SSID), may be transmitted or received to establish a communication connection, and then various pieces of information may be transmitted and received using the established communication connection.

In addition, the wireless communication module may communicate according to various communication standards such as IEEE, Zigbee, 3rd Generation (3G), 3rd Generation Partnership Project (3GPP), Long Term Evolution (LTE), 5^{th} generation (5G). The NFC module may communicate by a near field communication (NFC) method using 13.56 MHz band among various RF-ID frequency bands of 135 kHz, 13.56 MHz, 433 MHz, 860 to 960 MHz, 2.45 GHz, and the like. In addition, the UWB module may accurately measure Time of Arrival (ToA) which is the time during which a pulse arrives a target and Angle of Arrival (AoA) which is a pulse arrival angle in a transmission device through communication between UWB antennas, and accordingly, precise distance and location are able to be recognized within an error range within a several tens centimeters in a room.

Particularly, in various embodiments according to the disclosure, the processor 120 may receive information indicating a content according to the disclosure and information about a neural network model 10 from the external device through the communicator. In addition, in a case where the neural network model 10 according to the disclosure includes an external sever, the processor 120 may control the communicator to transmit the information indicating the access history of the user to the external server and receive information indicating the recommended content through the communicator. In addition, the processor 120 may receive a user input for providing the information indicating the access history of the user and the information indicating the recommended content from a user terminal through the communicator. In addition, various information and the data may be transmitted and received between the external device, the external server, and the user terminal.

The input interface may include circuitry and the processor 120 may receive a user command for controlling the operation of the electronic device 100 through the input interface. Specifically, the input interface may be configured with constituent elements of a microphone, a camera, and a remote control signal receiver. In addition, the input interface may be implemented to be included in a display as a touch screen. Particularly, the microphone may receive a voice signal and convert the received voice signal to an electrical signal.

Particularly, in various embodiments according to the disclosure, the processor 120 may receive a user input corresponding to an access of a user through the input interface and receive a user input for providing recommended content information. For example, the processor 120 may receive a user input such as a user input for watching a content through the input interface, a user input for loading a web page, or the like, and obtain information indicating the access history of the user based on the received user input.

The output interface may include circuitry and the processor 120 may output various functions that the electronic device 100 is able to perform through the output interface. In addition, the output interface may include at least one of a display, a speaker, and an indicator (e.g., a light emitting diode).

The display may output image data by the control of the processor 120. Specifically, the display may output an image pre-stored in the memory 110 by the control of the processor 120. Particularly, the display according to an embodiment of the disclosure may display a user interface stored in the memory 110. The display may be implemented as a liquid crystal display (LCD) panel or organic light emitting diodes (OLED) and the display may also be implemented as a flexible display, a transparent display, or the like according to circumstances. However, the display according to the disclosure is not limited to the specific type.

The speaker may output audio data by the control of the processor 120 and the indicator may blink by the control of the processor 120.

Particularly, in various embodiments of the disclosure, the processor 120 may provide a content and information indicating a recommended content through the output interface. For example, the processor 120 may control the display to display the content and control the display to display the information indicating the recommended content while the content is displayed on the display. In addition, the processor 120 may display a user interface and receive a user input for providing information indicating the recommended content through the user interface.

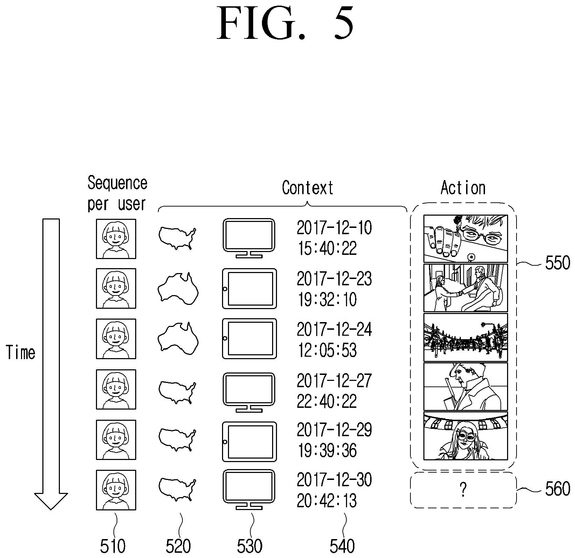

Hereinafter, an example related to the providing of the information indicating the recommended content will be described with reference to FIGS. 5 to 8.

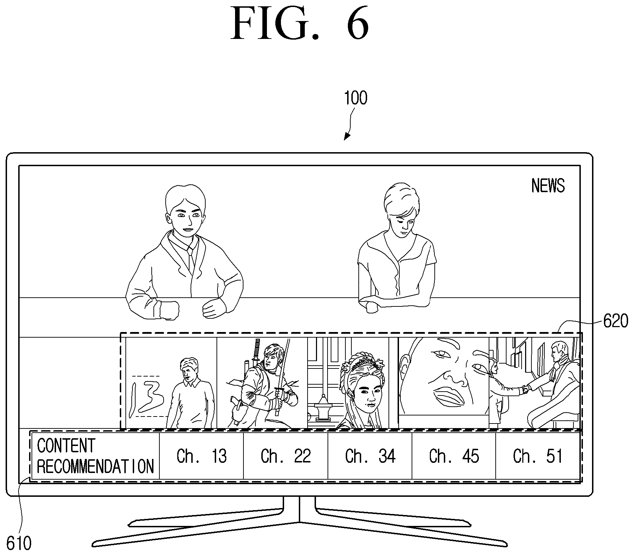

FIG. 5 is a diagram illustrating information indicating an access history of a user according to an embodiment, and FIG. 6 is a diagram illustrating an example of a user interface for providing information indicating a recommended content based on the access history of the user.

In FIGS. 5 and 6, a case where the neural network model 10 is a neural network model for obtaining the information indicating the recommended content based on the access history for an image content of the user will be described as an example.

Specifically, the information indicating the access history of the user may include various information indicating that the user accessed various contents provided through the electronic device 100.

Referring to FIG. 5, the information indicating the access history of the user may include information 510 indicating a user. Specifically, the information 510 indicating the user may include information for identifying the user, from among a plurality of users, that accessed the plurality of contents in a specific session. For example, the information 510 indicating the user may include profile information indicating a user of the electronic device 100 or a user terminal connected to the electronic device 100, login information for an application/web site, or the like.

The information indicating the access history of the user may include context information related to the access of the user. Specifically, the context information related to the access of the user may include information 520 on a region where the user accessed the content, information 530 on a device used by the user to access the content, and information 540 on time when the user accessed the content.

The information indicating the access history of the user may include information 550 on the content according to the access of the user. Specifically, the information 550 on the content according to the access of the user may include information indicating what the content that the user accessed in sequence is. FIG. 5 illustrates that information indicating a recommended content may be provided based on the information indicating the access history of the user in a region 560 on a lower end of the information 550 on the content according to the access of the user.

The processor 120 may divide the sessions according to the access of the user based on the information 510 indicating the user, the information 520 on the region where the user accessed the content, the information 530 on the device used by the user to access the content, the information 540 on the time when the user accessed the content, and the information 550 on the content according to the access of the user, and determine nodes of the individual graph corresponding to each divided session and data corresponding to the nodes, thereby generating an individual graph corresponding to each session. In this regard, the data corresponding to the nodes of the individual graph may include context information related to the access of the user, in addition to the information 550 on the content according to the access of the user.

When the individual graph corresponding to each session is generated, the processor 120 may obtain information indicating a recommended content corresponding to the individual graph using the neural network model trained according to the disclosure and provide the information to the user. In addition, the information indicating the recommended content may be provided through a user interface, such as that illustrated in FIG. 6.

Referring to FIG. 6, while the content is displayed on the display of the electronic device 100, the processor 120 may control the display to display a first user interface 610 for receiving a user input. The first user interface 610 may include a UI item (e.g., content recommendation) for receiving recommended content, in addition to UI items corresponding to channel numbers (e.g., Ch. 13, Ch. 22, Ch. 34, Ch. 45 and Ch. 51).

When a user input for selecting the UI item for the recommended content is received through the first user interface 610, the processor 120 may control the display to display a second user interface 620 indicating the recommended content. Referring to FIG. 6, the second user interface may include thumbnail images for the plurality of recommended contents.

When a user input for selecting one content of the plurality of recommended contents is received through the second user interface 620, the processor 120 may control the display to display the one content.

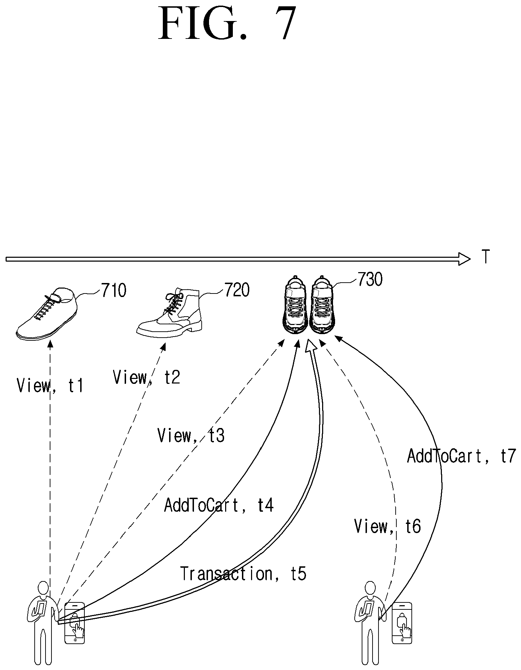

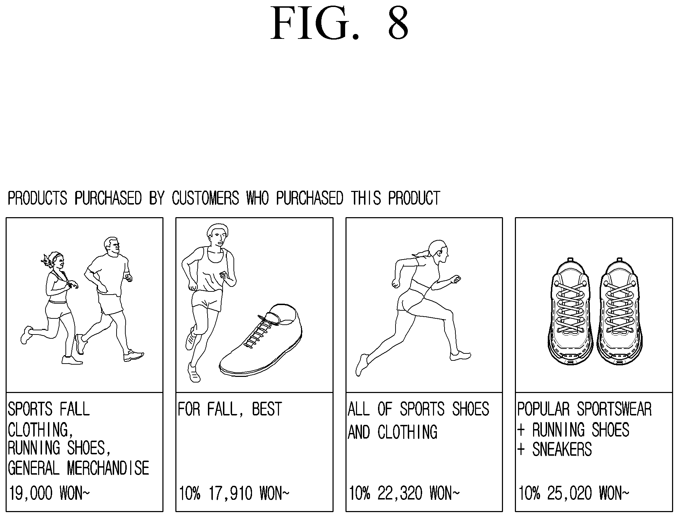

Hereinabove, referring to FIGS. 5 and 6, an example of the user interface for providing the information indicating the access history of the user and the information indicating the recommended content according to an example of the disclosure has been described, but the examples described above are merely examples, and various other embodiments may be applied to the disclosure. Another embodiment will be described with reference to FIGS. 7 and 8.

FIG. 7 is a diagram illustrating information indicating the access history of the user according to an embodiment, and FIG. 8 is a diagram illustrating an example of the user interface for providing information indicating the recommended content based on the access history of the user.

In the description of FIGS. 7 and 8, a case where the neural network model 10 is a neural network model for obtaining information indicating products, which is a recommended content based on the access history of a web page representing product information of the user, will be described as an example. In FIG. 7, the products are shoes 710, 720, and 730. However, this is an example and embodiments are not limited thereto.

Referring to FIG. 7, the information indicating the access history of the user may include information indicating that the user viewed information about a specific product (View of FIG. 7), information indicating that the user added a specific product to a cart (AddToCart of FIG. 7), information indicating that the user performed a transaction for the specific product (Transaction of FIG. 7), and information indicating time when the user accessed the specific product (ti to t₇ of FIG. 7).

The processor 120 may divide the session according to the access of the user based on information indicating that the user viewed the information about the specific product, the information indicating that the user added the specific product to the cart, the information indicating that the user purchased the specific product, and the information indicating the time when the user accessed the product, and determine nodes of the individual graph corresponding to each divided session and data corresponding to the nodes, thereby generating the individual graph corresponding to each session.

For example, when an interval between the time ts when the user performed the transaction for the specific product and the time t₆ when the user viewed the information indicating the specific product after that exceeds a predetermined threshold time, the processor 120 may divide the access performed by making a deal for the specific product by the user and the access performed by viewing the information indicating the specific product by the user after that into different sessions.

When determining the nodes of the individual graph corresponding to each divided session and data corresponding to the nodes, the processor 120 may apply a higher weight to the information indicating that the user added the specific product to the cart, compared to the information indicating that the user viewed the information indicating the specific information, and apply a higher weight to the information indicating that the user purchased the specific product, compared to the information indicating that the user added the specific product to the cart. In this regard, the data corresponding to the nodes of the individual graph may include, not only the information indicating that the user accessed the specific product, but also specifically, the information indicating what kind of operation the access of the user for the specific product is.

When the individual graph corresponding to each session is generated, the processor 120 may obtain information indicating a recommended content corresponding to the individual graph using a neural network model trained according to the disclosure and provide the information to the user. In addition, the information indicating the recommended content may be provided through a user interface illustrated in FIG. 8. Specifically, referring to FIG. 8, the user interface may include an image of a product which is the recommended content for the user, and recommended content information including description of the product, a price of the product, and the like.

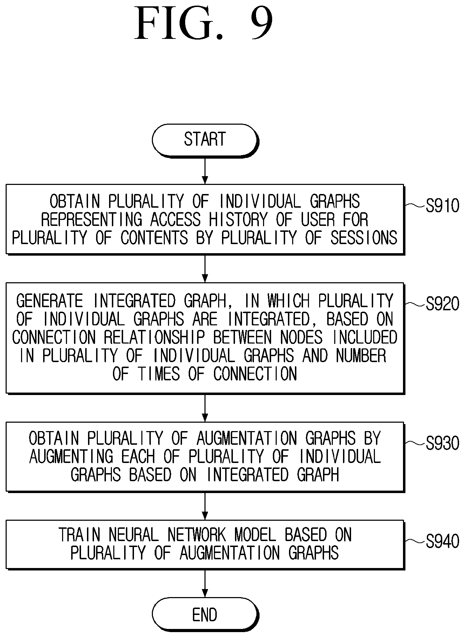

FIG. 9 is a flowchart illustrating a method for controlling the electronic device 100 according to an embodiment.

Referring to FIG. 9, the electronic device 100 may obtain a plurality of individual graphs representing an access history of a user for a plurality of contents by a plurality of sessions (S910). Specifically, the electronic device 100 may collect information indicating a history that the user accessed the plurality of contents during a predetermined period. In addition, the electronic device 100 may divide the access history of the user by the plurality of sessions, and obtain the plurality of individual graphs representing the access history of the user for each session.

When the plurality of individual graphs are obtained, the electronic device 100 may generate an integrated graph, in which the plurality of individual graphs are integrated, based on a connection relationship between nodes included in the plurality of individual graphs and the number of times of connection (S920).

When the integrated graph is obtained, the electronic device 100 may obtain a plurality of augmentation graphs by augmenting each of the plurality of individual graphs based on the integrated graph (S930).

When the plurality of augmentation graphs are obtained, the electronic device 100 may train the neural network model 10 based on the plurality of augmentation graphs. Specifically, the electronic device 100 may obtain a contrastive loss corresponding to the plurality of augmentation graphs and train the neural network model 10 based on the obtained contrastive loss according to a contrastive learning method (S940).

A method for controlling the electronic device 100 according to the embodiment may be implemented as a program and provided to the electronic device 100. Particularly, a program including the method for controlling the electronic device 100 may be stored and provided in a non-transitory computer readable medium.

Specifically, in a non-transitory computer readable medium including a program executing the method for controlling the electronic device 100, the method for controlling the electronic device 100 may include obtaining a plurality of individual graphs representing an access history of a user for a plurality of contents by a plurality of sessions, generating an integrated graph, in which the plurality of individual graphs are integrated, based on a connection relationship between nodes included in the plurality of individual graphs and the number of times of connection, obtaining a plurality of augmentation graphs by augmenting each of the plurality of individual graphs based on the integrated graph, and training a neural network model 10 based on the plurality of augmentation graphs.

The method for controlling the electronic device 100 and the non-transitory computer readable medium including the program executing the method for controlling the electronic device 100 are descried above briefly, but this is merely for not repeating the overlapped description, various examples of the electronic device 100 may be applied to the method for controlling the electronic device 100 and a computer readable medium including the program executing the method for controlling the electronic device 100.

The function of the neural network model 10 described above may be performed through a memory storing instructions and a processor executing the instructions.

The processor may be formed of one or a plurality of processors. The one or the plurality of processors may be a general-purpose processor such as a CPU, an AP, a graphic dedicated processor such as a GPU or a VPU, or an artificial intelligence dedicated processor such as an NPU, or the like.

The one or the plurality of processors may perform control to process the input data according to a predefined action rule or an artificial intelligence model stored in the nonvolatile memory and the volatile memory. The predefined action rule or the artificial intelligence model may be formed through training.

Being formed through training herein may, for example, indicate that a predefined action rule or an artificial intelligence model for a desired feature is formed by applying a learning algorithm to a plurality of pieces of training data. Such training may be performed in a device demonstrating artificial intelligence according to the disclosure or performed by a separate server and/or system.

The artificial intelligence model may include a plurality of neural network layers. Each layer has a plurality of weight values, and executes processing of the layer through a processing result of a previous layer and processing between the plurality of weight values. Examples of the neural network may include convolutional neural network (CNN), a deep neural network (DNN), recurrent neural network (RNN), restricted Boltzmann machine (RBM), deep belief network (DBN), bidirectional recurrent deep neural network (BRDNN), Generative Adversarial Networks (GAN), and deep Q-network, but the neural network of the disclosure is not limited to the above examples, unless otherwise noted.

The learning algorithm may be a method for training a predetermined target machine (e.g., robot) by using a plurality of pieces of training data to allow the predetermined target device to determine or predict by itself. Examples of the learning algorithm include supervised learning, unsupervised learning, semi-supervised learning, or reinforcement learning, but the learning algorithm of the disclosure is not limited to the above examples, unless otherwise noted.

The machine-readable storage medium may be provided in a form of a non-transitory storage medium. Here, the non-transitory storage medium is tangible and may not include signals (e.g., electromagnetic wave), and this term does not distinguish that data is semi-permanently or temporarily stored in the storage medium. For example, the non-transitory storage medium may include a buffer temporarily storing data.

According to an embodiment, the methods according to various embodiments disclosed in this disclosure may be provided in a computer program product. The computer program product may be exchanged between a seller and a purchaser as a commercially available product. The computer program product may be distributed in the form of a machine-readable storage medium (e.g., compact disc read only memory (CD-ROM)) or distributed online (e.g., downloaded or uploaded) through an application store (e.g., PlayStore^{™}) or directly between two user devices (e.g., smartphones). In a case of the on-line distribution, at least a part of the computer program product (e.g., downloadable application) may be at least temporarily stored or temporarily generated in a machine-readable storage medium such as a memory of a server of a manufacturer, a server of an application store, or a relay server.

Each of the elements (e.g., a module or a program) according to various embodiments described above may include a single entity or a plurality of entities, and some sub-elements of the abovementioned sub-elements may be omitted or other sub-elements may be further included in various embodiments. Alternatively or additionally, some elements (e.g., modules or programs) may be integrated into one entity to perform the same or similar functions performed by each respective element prior to the integration.

Operations performed by a module, a program, or other elements, in accordance with various embodiments, may be performed sequentially, in a parallel, repetitive, or heuristic manner, or at least some operations may be performed in a different order, omitted, or may add a different operation.

In this disclosure, the term unit or module may include a unit implemented with hardware, software, or firmware and may be interchangeably used with terms, for example, logic, logic blocks, parts, or circuits. The unit or the module may be a part integrally formed or a minimum unit or a part of the part performing one or more functions. For example, the module may be implemented as an application-specific integrated circuit (ASIC).

Various embodiments of the disclosure may be implemented as software including instructions stored in machine (e.g., computer)-readable storage media. The machine is a device which invokes instructions stored in the storage medium and is operated according to the invoked instructions, and may include an electronic device (e.g., electronic device 100) according to the disclosed embodiments.

In a case where the instruction is executed by a processor, the processor may perform a function corresponding to the instruction directly or using other elements under the control of the processor. The instruction may include a code made by a compiler or a code executable by an interpreter.

While aspects of embodiments have been shown and described, it will be understood that various changes in form and details may be made therein without departing from the spirit and scope of the following claims.

## Claims

1. An electronic device comprising:
a memory storing a neural network model; and
a processor configured to:
obtain a plurality of individual graphs representing an access history of a user for a plurality of contents by a plurality of sessions;
generate an integrated graph, in which the plurality of individual graphs are integrated, based on a connection relationship between nodes included in the plurality of individual graphs and a number of times each connection between the nodes is repeated;
obtain a plurality of augmented graphs by augmenting each of the plurality of individual graphs based on the integrated graph; and
train the neural network model to provide recommended content based on the plurality of augmented graphs.

2. The electronic device according to claim 1, wherein the processor is further configured to obtain at least one augmented graph of the plurality of augmented graphs by adding at least one node included in the integrated graph to a plurality of nodes included in each of the plurality of individual graphs.

3. The electronic device according to claim 1, wherein the processor is further configured to obtain at least one augmented graph of the plurality of augmented graphs by changing at least one node of a plurality of nodes included in each of the plurality of individual graphs to at least one node included in the integrated graph.

4. The electronic device according to claim 1, wherein the processor is further configured to train the neural network model based on a contrastive loss for the plurality of augmented graphs.

5. The electronic device according to claim 1, wherein the processor is further configured to implement an encoder configured to obtain vectors corresponding to the plurality of individual graphs and vectors corresponding to the plurality of augmented graphs, a prediction module configured to obtain recommended content information corresponding to each of the plurality of individual graphs, an augmentation module configured to obtain the plurality of augmented graphs by augmenting each of the plurality of individual graphs, and a contrastive loss obtaining module configured to obtain the contrastive loss for the plurality of augmented graphs.

6. The electronic device according to claim 5, wherein the processor is further configured to train the encoder to map augmented graphs corresponding to common individual graphs, among the plurality of augmented graphs, with vectors in a short distance on a vector space, and map augmented graphs corresponding to different individual graphs among the plurality of augmented graphs with vectors in a long distance on the vector space.

7. The electronic device according to claim 5, wherein a vector space for defining vectors corresponding to the plurality of augmented graphs is different from a vector space for defining the contrastive loss for the plurality of augmented graphs.

8. The electronic device according to claim 1, wherein the processor is further configured to control the augmentation module to obtain three or more augmented graphs for each of the plurality of individual graphs by augmenting each of the plurality of individual graphs by three or more different methods, and
wherein the contrastive loss comprises two or more positive pairs defined based on vectors corresponding to the three or more augmented graphs.

9. A method for controlling an electronic device using a neural network model, the method comprising:
obtaining a plurality of individual graphs representing an access history of a user for a plurality of contents by a plurality of sessions;
generating an integrated graph, in which the plurality of individual graphs are integrated, based on a connection relationship between nodes included in the plurality of individual graphs and a number of times each connection between the nodes is repeated;
obtaining a plurality of augmented graphs by augmenting each of the plurality of individual graphs based on the integrated graph; and
training the neural network model to provide recommended content based on the plurality of augmented graphs.

10. The method for controlling an electronic device according to claim 9, wherein the obtaining the plurality of augmented graphs comprises obtaining at least one augmented graph of the plurality of augmented graphs by adding at least one node included in the integrated graph to a plurality of nodes included in each of the plurality of individual graphs.

11. The method for controlling an electronic device according to claim 9, wherein the obtaining the plurality of augmented graphs comprises obtaining at least one augmented graph of the plurality of augmented graphs by changing at least one node of a plurality of nodes included in each of the plurality of individual graphs to at least one node included in the integrated graph.

12. The method for controlling an electronic device according to claim 9, wherein the training the neural network model comprises training the neural network model based on a contrastive loss for the plurality of augmented graphs.

13. The method for controlling an electronic device according to claim 9, further comprising:
controlling an encoder to obtain vectors corresponding to the plurality of individual graphs and vectors corresponding to the plurality of augmented graphs;
controlling a prediction module to obtain recommended content information corresponding to each of the plurality of individual graphs;
controlling an augmentation module to obtain the plurality of augmented graphs by augmenting each of the plurality of individual graphs; and
controlling a contrastive loss obtaining module to obtain the contrastive loss for the plurality of augmented graphs.

14. The method for controlling an electronic device according to claim 13, further comprising training the encoder to map augmented graphs corresponding to common individual graphs, among the plurality of augmented graphs, with vectors in a short distance on a vector space, and map augmented graphs corresponding to different individual graphs among the plurality of augmented graphs with vectors in a long distance on the vector space.

15. The method for controlling an electronic device according to claim 13, wherein a vector space for defining vectors corresponding to the plurality of augmented graphs is different from a vector space for defining the contrastive loss for the plurality of augmented graphs.
